# EUROPEAN PATENT APPLICATION

(11) **EP 4 207 700 A1**
(43) Date of publication of application: **05.07.2023**
(21) Application number: 22216965.8
(22) Date of filing: 28.12.2022
(51) Int. Cl.: H04L 41/0677, H04L 41/0686, H04L 43/16

(54) **NOISE AND IMPAIRMENT LOCALIZATION**

(30) Priority: 31.12.2021 US 202163295696 P
(71) Applicant: Promptlink Communications, Inc., Oceanside, CA 92056 (US)
(72) Inventor: TOWFIQ, Foad, Vista (CA); PODAREVSKY, Alexander, Oceanside (CA); POTAICHUK, Volodymyr, Kiev (UA); SHTIKHLAYTNER, Antonin, Kiev (UA); ZHURAVLOV, Andriy, Kiev (UA); VASYLKOVSKYI, Dmytro, Kiev (UA); KISILCHUK, Bohdan, Kiev (UA); ANTIUFIEIEV, Volodymyr, Kiev (UA)
(74) Representative: Barnfather, Karl Jon

(57) **Abstract**

Various techniques include detecting noise resulting from data network impairments and analyzing the noise to determine a likely source and location of the data network impairments. The analysis is used to generate noise reports that instruct network technicians how to check network devices for network impairments. The instructions can be provided on portable electronic devices that are further configured to receive data characterizing any impairments identified at the network devices. The data generated by the network technicians can be used to improve the ability of the techniques to correctly identify the source of data network impairments.

## Description

### CROSS-REFERENCE TO RELATED APPLICATIONS

This application claims priority to U.S. Provisional Patent Application Serial No. 63/295,696, entitled "NOISE AND IMPAIRMENT LOCALIZATION" filed on December 31, 2021, the contents of which are hereby incorporated by reference in their entirety.

### FIELD

The present disclosure relates generally to analysis of data obtained from a hybrid fiber coaxial (HFC) network to identify and locate impairments and noise entering or originating from within the network. In particular, the described embodiments relate to: generating automated reports and instructions for field technicians; and collecting feedback from field technicians for labeling the data and training machine learning models.

### BACKGROUND

Service providers (e.g., operators) provide customers (e.g., subscribers) with services, such as multimedia, audio, video, telephony, data communications, wireless networking, and wired networking. Service providers provide such services by deploying one or more electronic devices at their customers' premises, and then connecting the deployed electronic device to the service provider's network or infrastructure. The deployed electronic devices are often called Customer Premise Equipment (CPE). For example, a cable company delivers media services to customers by connecting an electronic device, such as a set-top box or a cable modem, located at customer's premise to the cable company's network. This CPE is the device that the service provider uses to deliver the service to the customer.

Networks, such as those maintained by service providers or their customers, may have noise cause by impairments, which can cause service degradation and customer dissatisfaction. Examples of impairments include loose or corroded connectors, damaged cables, and flooded amplifiers. Over time, as the network ages, the severity and number of impairments increase. Service providers face challenges in identifying the type of noise in the network and localizing the noise in the network to fix the impairments in a timely manner so as to limit the impacts of service degradation or outage of their customers.

### SUMMARY

Some techniques for identifying and prioritizing maintenance actions to address impairments of a network are unreliable and/or inaccurate. For example, some techniques do not identify particular types of impairments and/or are unable to identify the location where noise caused by the impairment(s) is entering into or originating within the network. Other techniques do not prioritize the repair of impairments based on the severity of the impairments and/or the number of affected customers.

A method for automated noise and impairment localization and reporting in a data network is described. In some embodiments, the method is performed in a hybrid coaxial fiber network. The method includes the following: identifying one or more suspected sources of noise on the data network; transmitting a report to one or more network technicians that includes instructions for troubleshooting each of the one or more suspected sources of noise; receiving data generated by the one or more network technicians describing impairments or noise exceeding a predetermined threshold identified while investigating the suspected sources of noise; and updating a process used to identify sources of noise based on the data generated by the one or more technicians.

A computer-readable storage medium storing one or more programs for noise analysis in a data network is described. The one or more programs are configured to be executed by one or more processors of an electronic device, and the one or more programs including instructions for: identifying one or more suspected sources of noise on the data network; transmitting a noise report to one or more network technicians that includes a checklist for troubleshooting each of the one or more suspected sources of noise; receiving data generated by the one or more network technicians describing any impairments and noise exceeding a predetermined threshold discovered while investigating the suspected sources of noise; and updating a process used to identify sources of noise based on the data generated by the one or more technicians.

An electronic device is described. The electronic device includes one or more processors; and memory storing one or more programs configured to be executed by the one or more processors. The one or more programs including instructions for: identifying one or more suspected sources of noise on the data network; transmitting a noise report to one or more network technicians that includes a checklist for troubleshooting each of the one or more suspected sources of noise; receiving data generated by the one or more network technicians describing any impairments and noise exceeding a predetermined threshold discovered while investigating the suspected sources of noise; and updating a process used to identify sources of noise based on the data generated by the one or more technicians.

A method is described that includes receiving telemetry data from a data network; identifying one or more degradations of service on the data network based on the telemetry data; correlating the identified one or more degradations of service on the data network with previously identified suspected sources of noise; and updating one or more actions to be taken in response to the previously identified suspected sources of noise based on the identified one or more degradations of service.

A method is described that includes detecting noise on a data network; determining a type of noise associated with the detected noise; identifying impairment types capable of producing the identified type of noise; correlating the identified impairment types with a plurality of locations on the data network capable of producing the identified impairment types; and identifying one or more groups of network devices with high noise scores to point to a highest probability location of the plurality of locations.

### BRIEF DESCRIPTION OF THE DRAWINGS

For a better understanding of the various described embodiments, reference should be made to the Detailed Description of Embodiments below, in conjunction with the following drawings in which like reference numerals refer to corresponding parts throughout the figures.
FIG. 1 shows an exemplary electronic device, in accordance with some embodiments.
FIG. 2 shows a diagram illustrating a relationship between three components of a noise localization architecture.
FIGS. 3A - 3C describe operations performed by each of the engines making up the noise localization architecture depicted in FIG. 2.
FIGS. 4A - 4F show a series of exemplary user interface screens of a noise troubleshooting application running on a portable electronic device.
FIG. 5 shows a map illustrating an exemplary data network that includes the different types of network devices that can be associated with a suspected point of impairment.
FIG. 6 shows details of an exemplary troubleshooting checklist.
FIGS. 7A-7B show details of another exemplary troubleshooting checklist. illustrate exemplary user interfaces for analyzing a network, in accordance with some embodiments.
FIG. 8 illustrates an exemplary flow diagram, in accordance with some embodiments.

### DETAILED DESCRIPTION OF EMBODIMENTS

The following detailed description sets forth exemplary methods, parameters, and the like. It should be recognized, however, that such description is not intended as a limitation on the scope of the present disclosure, but is instead provided as a description of exemplary embodiments.

One significant impairment in a cable network is upstream noise. Upstream noise can enter from one or more points of impairments into the network (e.g., ingress) or be generated from a network device (or at an interconnection of a network device) such as an amplifier or a cable modem within the network. Upstream noise on one upstream data communication channel travels upward toward the fiber-node or cable modem termination system (CMTS) and impairs the communication of all devices on the same upstream channel. However, it is difficult to detect (or to accurately detect) (1) from where the noise entered or originated into the network and/or (2) which network device generated the noise. In networks, such as in a cable network (e.g., a DOCSIS network), a significant amount of data related to the functioning of network devices (e.g., a cable modem (CM) or modem, a cable modem termination system (CMTS)) is collected and, optionally, transmitted across the network. These network parameters include, but are not limited to, upstream and downstream (transmitted and received) power levels, upstream and downstream signal to noise ratio (SNR), Codeword Error (CER), pre-equalization and post equalization parameters, and RF upstream and downstream spectrum data. These parameters are used for monitoring the performance of the network as well as performing reactive and proactive network maintenance (PNM). In the presence of upstream noise, some of these parameter values change differently in different network segments relative to the location where noise is entering (or being generated in) the network (noise location), and therefore, can be used to determine the location of the noise.

The values of many of these network parameters show different levels of inconsistency in time and for different channel frequencies, in the presence of noise and for different types of noise and in different network segments. Different network impairments result in different inconsistencies in the network parameters. For example, the inconsistencies differ when other types of (or additional) impairments are present in the network. One particular challenge is that multiple (or all) modems affected by the same noise on upstream can show the same kind of inconsistencies, thereby making it more difficult to localize the source of the noise. Using advanced statistical analysis and/or artificial intelligence techniques, it is possible to analyze the inconsistencies (in time, in frequency, for noise type and for network segment, etc.) of the values of network parameters, their combination and/or correlation identify the source of noise and/or to locate where (or near to what network device) noise is entering the network. In some examples, this process produces one or more noise scores showing which modem is likely to be the source of noise. In some examples, this process produces one or more noise scores showing where (e.g., at which network device, near which network device) noise is likely being generated or entering the network. In some examples, this process produces one or more noise scores showing what type of noise is likely present in the network. Some examples of the types of noise that can be identified include: 1. Noise that entered the network through an impairment in the network, such as a damaged cable or a damaged amplifier connector (ingress); 2. Noise that was generated/emitted by a network device (e.g., an amplifier or a fiber node) 3. Noise that was generated/emitted by a CPE (e.g., cable modem or a set top box); 4. Noise that was generated by a CPE that was cause by an impairment in the network. For example, a loose connected near/at the CPE may impair the grounding of the shield and cause the CPE to emit noise; 5. Noise generated by CPEs (DOCSIS modems or Set Top Boxes) due to higher than allowed upstream transmit power; 6. Noise generated in the network due to nonlinear distortion, such as Common Path Distortion (CPD) caused, for example, by a corroded connector; and 7. Noise generated due to nonlinear distortion, caused by overloaded amplifiers or a fiber node.

The process monitors network telemetry data to identify the type of noise and/or to localize noise. Noise can be localized by monitoring the telemetry data over time and/or over multiple channel frequencies. The values of the telemetry data also reflect the type of noise and/or the proximity to the noise source. Noise localization is performed using one or more parameters based on the telemetry data to generate noise scores for respective CPEs. In some examples, one or more first order derivatives (rate of change; in time) of the parameters are also used to generate the noise score. In some examples, one or more second order derivatives (how the rate of change is changing, in time) of the parameters are used to generate the noise score. The parameters optionally used to generate noise scores can be categorized into one of several categories, including (1) parameters obtained directly from the modems and/or CMTSes, (2) parameters calculated using category 1 parameter values (e.g., parameters obtained directly from modems/CMTSes), (3) parameters obtained by analyzing variations of the category 1 and 2 parameters over time (e.g., over a single channel), (4) parameters obtained by analyzing variations of parameters of category 1 and 2 over multiple channel frequencies (e.g., at a single point in time), (5) parameters obtained from combining the parameters in categories 1, 2, 3 and 4, and (6) calculated parameters that show dependencies and/or correlation between the parameters in any two or more of categories 1, 2, 3, 4 and 5.

Exemplary category 1 parameters obtained directly from modems and/or CMTSes optionally include: CM Upstream signal to noise ratio (SNR), CM Transmit power level, CM Downstream SNR, CM Downstream Power level, CM Codeword Error Rate, CM Pre-Equalization coefficients, CMTS interface signal to noise ratio, CMTS receive power level, CMTS Codeword Error Rate, and CMTS Post-Equalization coefficients.

Exemplary category 2 parameters calculated using category 1 parameter values optionally include: CM Micro Reflection Level, CM Frequency Response, CM Group Delay, CMTS Micro Reflection, CMTS Frequency Response, CMTS Group Delay, NMTER- Non Main Tap Energy to Total Tap Energy, CMTS NMTER - CMTS Non Main Tap Energy to Total Tap Energy, MTR - Main Tap Ratio, TTE - Total Tap Energy, Downstream Noise Spectral Density, Upstream Noise Spectral Density.

Exemplary category 3 parameters obtained by analyzing variations of the category 1 and 2 parameters over time optionally include: standard deviation of category 1 and 2 parameters, coefficient of variation of category 1 and 2 parameters, first order derivative (rate of change in time) of 1 and 2 parameters, and second order derivative (how the rate of change is changing in time) of 1 and 2 parameters.

Exemplary category 4 parameters obtained by analyzing variations of the category 1 and 2 parameters over channel frequencies optionally include: standard deviation of category 1 and 2 parameters, coefficient of variation of category 1 and 2 parameters, first order derivative (rate of change in time) of 1 and 2 parameters, and second order derivative (how the rate of change is changing in time) of 1 and 2 parameters.

Exemplary category 5 parameters obtained by analyzing combination of the category 1, 2 and 3 parameters over time optionally include: NMTER to SNR ratio, Transmit power level to SNR ratio, etc.

Exemplary category 6 parameters obtained by analyzing correlation of the category 1, 2 and 3 parameters over time optionally include: Transmit power level variation and NMTER variation correlation in time, Transmit power level variation and MTER variation correlation in time, Transmit power level variation and TTE variation correlation in time, etc.

While monitoring the various parameters allows the process to determine the cause of the detected upstream noise in many cases, a network technician must still be sent to fix the impairment(s) associated with one or more network device and/or connections causing the upstream noise. Furthermore, due to variations in the layout and/or environmental factors affecting different portions of a cable network, there may be cases where the determined cause of the detected upstream noise is incorrect. One way to improve the ability of the process to accurately identify sources of noise on the cable network, is to require the network technician sent to fix the problem to take diagnostic readings of the device thought to be causing the upstream noise, or where a location of an impairment is less certain in the vicinity of a network segment where the upstream noise thought to be originating, prior to making an attempt to fix the problem and to document the actual cause of the upstream noise. In this way, the actual causes of the upstream noise can be used to identify the same problem coming up in the same portion of the cable network or in different portions of the cable network containing similar network equipment variations.

While network technicians are generally required to submit some form of documentation after fixing a network impairment, the documentation can be filled out in different manners making data provided by the documentation hard to aggregate and use to improve the identification of network impairments. Furthermore, when asked to investigate a particular piece of network equipment, different network technicians may approach the investigation in a variety of different ways making the actions taken by network technicians different depending on the network technician assigned to investigate. This results in a disparate approach to troubleshooting that makes establishing correlations between different types of impairments and their associated noise patterns difficult at best.

One solution to these problems of action uniformity is to instruct network technicians to step through network device-specific checklists when addressing a trouble ticket that require the network technician to take readings using a portable spectrum analyzer and/or power meter and/or an RF signal leakage detector to check for noise and impairment on the various inputs and outputs of the network equipment suspected to be causing, or in the vicinity of location suspected to be originating the upstream noise. The network technician can also be asked to identify what is causing upstream noise to be generated by a particular portion of a network device by selecting an identified problem from a list of common problems affecting the particular portion of the network device. The checklist can also require the network technician to take one or more pictures identifying the identified problem with the particular portion of the network device.

While the imagery from the uploaded images may not always be used by the process in helping to characterize the source of the noise, in some embodiments, metadata from the uploaded images can be used. For example, location data associated with the uploaded image can be used to confirm that the network technician was checking the right network device. In this way, instances where a false negative appears due to the network technician analyzing the wrong piece of network equipment can be avoided. The uploaded pictures may also allow investigators to get a better understanding of network impairments that are inconsistent with other similar instances. The metadata also includes a time stamp providing a clear indication of what time the network technician was present at the site. This can be important in instances where upstream noise is only being detected at particular times of day. In these cases, another technician can be sent back out to investigate the upstream noise at the right time and/or location.

Using the aforementioned techniques to standardize repair and reporting procedures, allows data entered by the technicians to be used to create labeled training data sets based on real-world troubleshooting events. The labeled training data sets can be used to improve the performance of one or more machine learning algorithms used to detect and/or characterize noise and localize impairments. In some complex impairment scenarios, data provided by the network technicians may be insufficient to present a clear enough picture of a particular situation to provide a thorough or complete description of the impairments causing the detected noise. For this reason, the data provided by the network technicians can be processed by an analysis engine that reviews the data provided by the network technicians in order to process complex situations, e.g., where multiple types of noise are present or where noise is being produced by more than one co-located or geographically-separated devices.

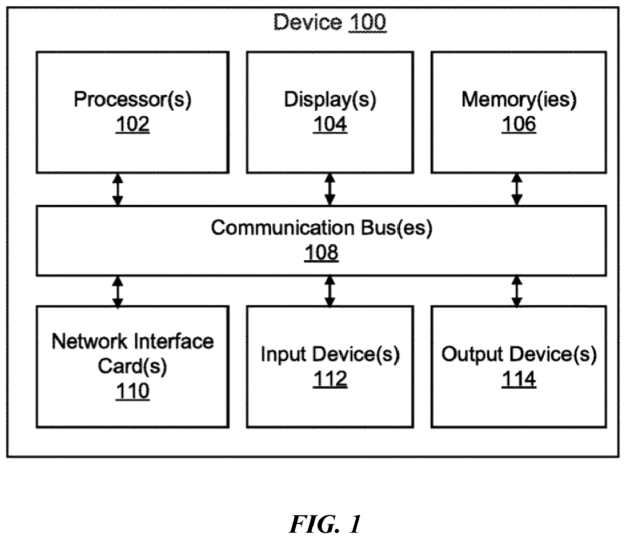

These and other embodiments are discussed below with reference to FIGS. 1-8. Those skilled in the art, however, will readily appreciate that the detailed description given herein with respect to these figures is for explanatory purposes only and should not be construed as limiting.

FIG. 1 illustrates an exemplary electronic device (e.g., a server, a computer, or a network device), in accordance with some embodiments. In some examples, the techniques described below can be performed at device 100. Device 100 is an electronic device with one or more processors 102, one or more displays 104, one or more memories 106, one or more network interface cards 110, one or more input devices (e.g., keyboard 112), one or more output device 114 (e.g., printer), connected via one or more communication buses 108. Many of elements of device 100 are optional, such as display 104, input devices 112, and output devices 114. Memories 106 can include random access memory, read-only memory, flash memory, and the like. Memory 106 can include a non-transitory computer-readable storage medium. The non-transitory computer-readable storage medium is configured to store one or more programs configured to be executed by the one or more processors 102 of device 100. The one or more programs optionally include instructions for performing the described techniques.

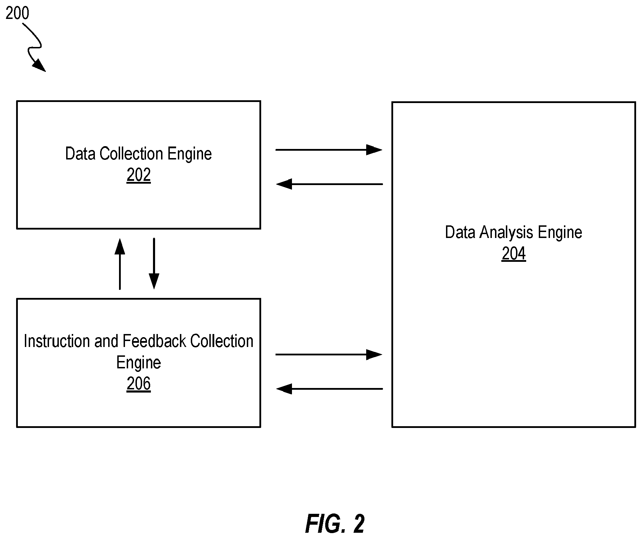

FIG. 2 shows a diagram illustrating a relationship between three components of a noise localization architecture 200. In particular, the noise localization architecture includes a data collection engine 202 configured to collect telemetry data from a data network. In some embodiments, the data network takes the form of a hybrid fiber coaxial network. Data collection engine 202 can also be configured to evaluate incoming telemetry data to determine in real-time or at predetermined sampling intervals when one or more channels are being adversely effected by upstream noise. This real-time data can be used in many ways. For example, the real-time data can be used to populate a noise alarm dashboard and generate an alert that is communicated to one or more operators or maintainers of the data network that one or more potential problems are occurring within the data network. In addition to generating an alarm in response to trouble on the data network, data collection engine 202 can be configured to increase a rate that it collects telemetry from the data network and send the telemetry on for further analysis to a data analysis engine 204 with a notification of the one or more detected problems. Data collection engine 202 can also be configured as a gathering point for data received by reported customer issues/complaints. Consequently, data collection engine 202 can be configured with a ticketing system configured to track user reported complaints. In some embodiments, instruction and feedback collection engine 206 can be configured to increase collection of telemetry data generated by a bonding group in which the user's CPE (i.e. modem) belongs and then notify data analysis engine 204 of the problems identified by the user for further analysis. In some embodiments, data collection engine 202 can be configured to update or cancel a trouble ticket generated from customer feedback with information gathered from the telemetry data generated by the data network. However, full analysis of the telemetry data is generally performed at data analysis engine 204 as well as the decision on whether to update or cancel the trouble ticket. Data collection engine 202 could also be configured to group the customer trouble ticket with one or more additional system generated trouble tickets at which point the trouble tickets could be sent directly to an instructionand feedback collection engine 206 or processed first by a data analysis engine 204 before being routed to instruction and feedback collection engine 206. Telemetry data indicating a suspected network point of impairment is forward to a data analysis engine 204. In some embodiments, the evaluation criteria for identifying telemetry data causing upstream noise can be an upstream channel with noise exceeding a threshold noise level.

Data analysis engine 204 includes criteria for characterizing telemetry data received from data collection engine 202 and noise localization algorithms for identifying suspected sources of the noisy upstream channels. Data analysis engine 204 will generally analyze telemetry data over multiple periods of time in order to identify variations in noise generated on a particular upstream channel. Data analysis engine 204 can also be configured to confirm suspected points of impairment identified in a trouble ticket received from data collection engine 202 should be investigated by technicians and may also provide additional troubleshooting steps that should be performed when investigating a suspected point of impairment. As mentioned above, data analysis engine 204 can also be employed to merge and/or combine multiple trouble tickets together when telemetry data received indicates a link between problems being experienced by multiple devices operating on the data network. In some embodiments, an action for combination can be initiated when a threshold number of trouble tickets correlate to a particular suspected point of impairment. This can greatly improve efficiency by avoiding a situation in which multiple network technicians are dispatched to different user residences in order to solve the same problem. In some embodiments, the noise localization algorithms can be updated or fine-tuned using feedback data gathered while troubleshooting detected noise and impairment issues on the data network.

For example, in the event a customer service representative (CSR) is on the phone with a customer complaining of poor data network service, the customer service representative employing the described embodiments is able to check the subscriber's CPE (cable modem) telemetry data. The CSR is then able to check to see if there is a trouble ticket for the segment of network feeding the subscriber's CPE. If there is no current trouble ticket associated with the network issues, the CSR can initiates analysis of the network segment. As part of the data analysis engine 204 analysis results the CSR receives information about the health of the network and a score for the health of the CPE. With this information the CSR can make an informed decision as how to open a trouble ticket and dispatch technicians to fix the issues.

Data analysis engine 204 is also capable of providing updates to a network technician at a customer's place of residence. For example, a troubleshooting checklist may instruct the technician to check a health score for a CPE prior to swapping out the CPE. In the event the health score indicates the CPE does not need to be swapped out the technician can instead of swapping the CPE move directly to initiating a trouble ticket to investigate issues related to a network segment of the data network responsible for servicing the customer.

Data analysis engine 204 can also be configured to intercept and validate a certain subset or in some cases all trouble tickets and send out notifications if it determines that a particular trouble ticket is unnecessary. In the event a trouble ticket is deemed to be unnecessary, data analysis engine 204 can be configured to institute a new trouble ticket addressing what is determined to be a more likely cause of the issues that led to creation of the trouble ticket. Alternatively, in the event a trouble ticket is being canceled because data analysis engine 204 determines that competition of a related trouble ticket should have addressed the issue, additional actions could be limited to sending an automated email to a customer asking the customer to confirm that their issues have been addressed and no further action is needed. This interception and validation process differs from situations in which cable operators experience and report wide spread service outages since noise issues more commonly cause degradation of service rather than loss of service and may affect different users in different ways. For this reason noise-based outages are typically more difficult to identify and fix than wide spread outages.

The feedback data is first processed by instruction and feedback collection engine 206. In some embodiments, instruction and feedback collection engine 206 acts as an interface between noise localization architecture 200 and network technicians. In its role as the interface, instruction and feedback collection engine 206 is responsible for transmitting reports instructing the network technicians how to troubleshoot and document suspected network impairments and also for receiving the feedback data from the network technicians. In some embodiments, instruction and feedback collection engine 206 will transmit autonomous requests for additional feedback data from network technicians where data has been left blank, feedback data appears to be erroneous or where additional data collection is needed to properly determine which network devices caused the network impairments. In some cases, instruction and feedback collection engine 206 may opt to send another technician to investigate a particular network device or a network segment when the actions of the first network technician either failed to fix the impairment or failed to properly document steps taken while troubleshooting the network device.

Instruction and feedback collection engine 206 is also responsible for sending feedback data back to data analysis engine 204 where as described above the feedback data can be used to train one or more of the noise localization algorithms. In some embodiments, instruction and feedback collection engine 206 can be responsible for using at least a portion of the feedback data to label the collected telemetry data with identified network impairments that generated the noise identified by the collected telemetry data. Once labeled the collected telemetry is more easily able to be used as machine learning training data to improve the noise localization algorithms. In some embodiments, data analysis engine 204 is configured to perform some of the labeling of the collected telemetry data. Generally, data analysis engine 204 will be responsible for performing data labeling in more complex noise localization scenarios that might include multiple sources and/or different types of noise.

In addition to the interactions describe above data analysis engine 204 can also be configured to adjust the operation of data collection 202 and instructions and feedback collection engine 206 in response to development of the noise localization algorithms indicating that, e.g., a lower or higher noise localization metrics threshold should be used with data collection engine 202 or where instructions issued to the network technicians by instruction and feedback collection engine 206 be adjusted to perform troubleshooting more quickly or with greater accuracy.

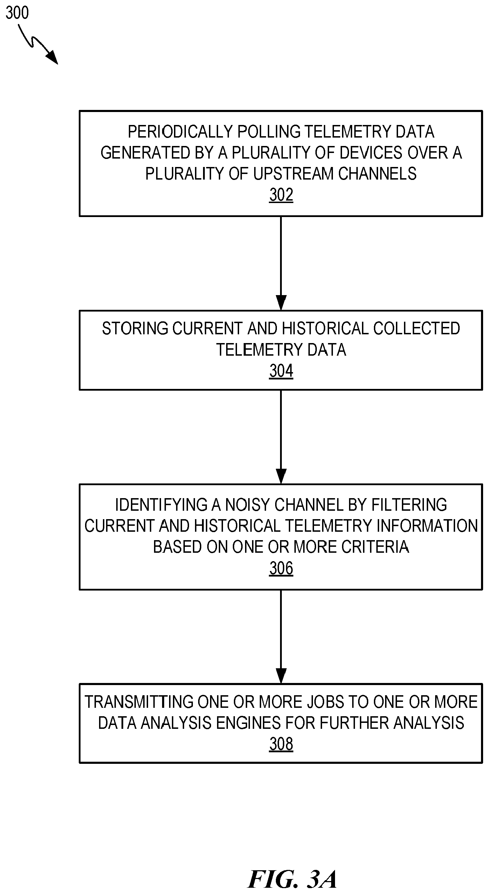

FIGS. 3A - 3C describe operations performed by each of the engines making up noise localization architecture 200. FIG. 3A shows operations 300 performed by data collection engine 202. In particular data collection engine 202, at step 302, is responsible for continuously or periodically polling telemetry data being generated by a data network. Data collection engine 202 is generally located within a network backbone of the data network so that telemetry data can be securely extracted from the data network. The telemetry data can include a wide variety of information including but not limited to network topology, coordinates for devices connected to or affecting the network in some way, upstream and downstream power levels, signal to noise ratios and pre-equalization parameters . Examples of devices referenced in the telemetry data include cable modems, cable modem termination systems (CMTS), smart amplifiers, fiber nodes, power supplies and the like. At 304, data collection engine 202 caches or more permanently stores real-time and historical telemetry data locally or at a remote location. In some embodiments, telemetry data can be stored locally for a threshold amount of time after which while older historical data can be stored remotely. At 306, data collection engine 202 can apply one or more filters to the incoming telemetry data to identify telemetry data indicating a potential impairment affecting the data network. Most of the filters focus on the detection of noisy upstream channels; however, it should be appreciated that data collection engine 202 can also be configured to monitor other information included in the telemetry data, e.g., noise affecting downstream channels. At 308, noise localization architecture can be configured to send any identified telemetry data to data analysis engine 204 formatted as one or more jobs for further analysis. It should be noted that data collection engine 202 can also be configured to communicate with instruction and feedback collection engine 206 and in particular when a network technician is attempting to close a job. Data collection engine can be configured to poll network devices associated with the job to confirm that the noise has been abated by the actions taken by the network technician.

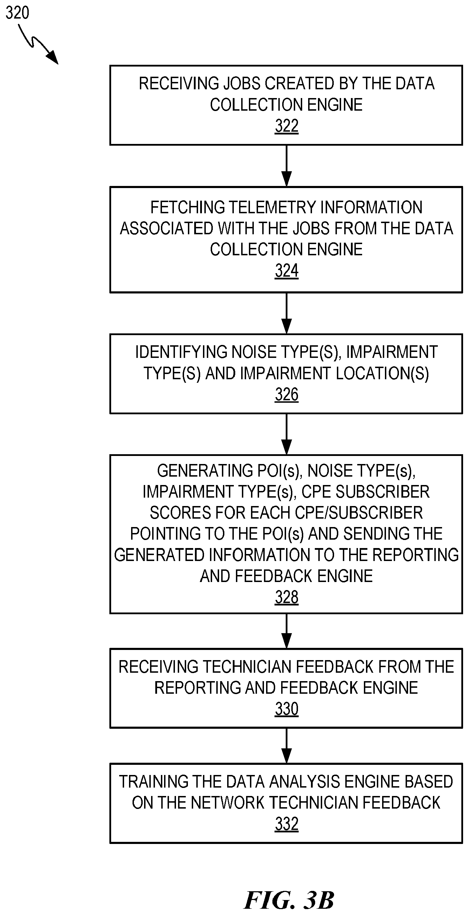

FIG. 3B shows operations 320 performed by data analysis engine 204. At step 322, data analysis engine 204 receives jobs created by data collection engine 202. In configurations where the telemetry does not accompany the jobs, data analysis engine can be configured to fetch telemetry data from data collection engine 202. In some embodiments, allowing data analysis engine 204 to fetch required telemetry data is more efficient than having data collection engine 202 send telemetry data it believes data analysis engine 202 needs. Particular, since data analysis engine undergoes periodic updates that may change the amount or type of telemetry needed when performing different types of analysis. Data analysis engine 204 can also be configured to fetch different types of telemetry data as it performs its analysis.

At 326, data analysis engine using machine learning techniques identifies the type of noise detected, the type(s) of suspected impairment(s) and the location(s) of the impairment. Suspected impairment types include physical damage and water damage / corrosion. Examples of physical damage includes loose connectors, broken cable shields and sharply bent cables. Examples of water / corrosion damage can include corroded connectors, corroded tap face plates and water collection within an amplifier.

At 328, data analysis engine 204 generates one or more points of interest (POIs) and associated noise types, impairment types, and CPE subscriber scores for each CPE/subscriber routed through the POI(s). The POIs are then transmitted from data analysis engine 204 to the instruction and feedback collection engine 206. CPE subscriber scores can be tabulated in many ways but will generally be calculated using information such as DOCSIS telemetry data, variation of telemetry data over time and correlation of telemetry data with other subscribers.

At 330, once a network technician has been dispatched to investigate and address any actual impairments identified at the POI(s), instruction and feedback collection engine 206 transmits information gathered by the network technicians while troubleshooting the POI(s). At 332, the feedback is then used to train the data analysis engine. In some embodiments, the feedback is used to autonomously generate training datasets that are used to improve performance of data analysis engine 204.

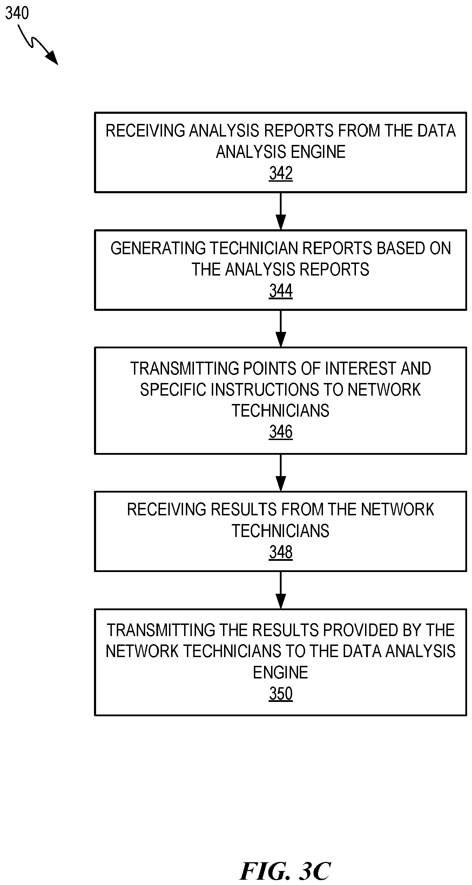

FIG. 3C shows operations 340 performed by instruction and feedback engine 206. At 342, instruction and feedback engine 206 receives information from data analysis engine in the form of one or more analysis reports. At 344, instruction and feedback engine 206 generates one or more technician reports based on the analysis reports. At 346, instruction and feedback collection engine 206 transmits the points of interest generated from the analysis reports and specific instructions by which the network technicians are supposed to troubleshoot the POI(s) to one or more network technicians. At 348, results from the troubleshooting are received from the network technicians. At 350, results are transmitted back to the data analysis engine where the results can be used to train data analysis engine or in some embodiments to generate additional analysis reports in the event the steps performed by the actions taken by the network technicians did not remove the noise associated with the suspected impairments.

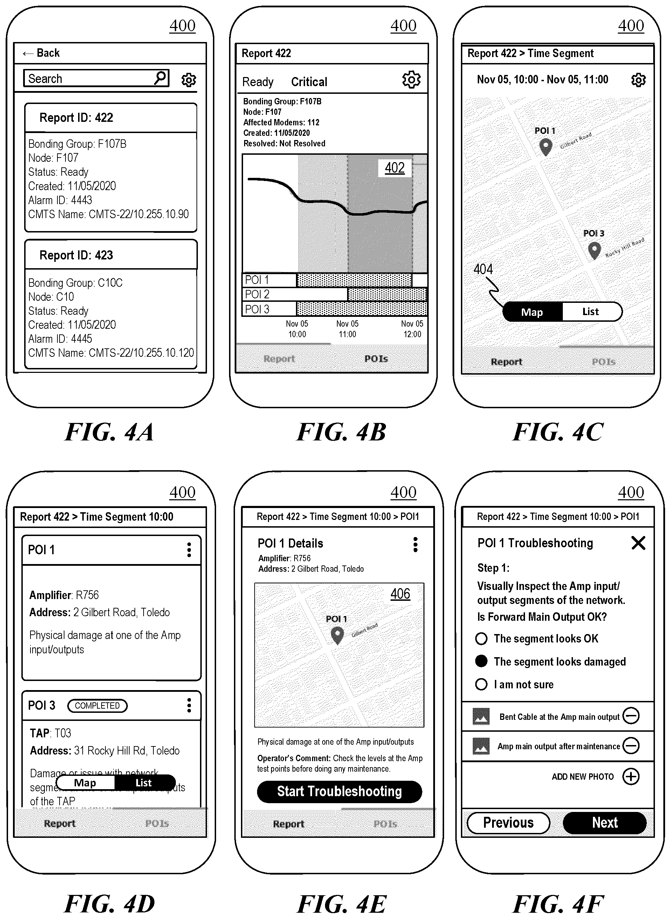

FIGS. 4A - 4F show a series of exemplary user interface screens of a noise troubleshooting application running on a portable electronic device 400. Device 400 is a representative device used by network technicians to receive job data from instruction and feedback collection engine 206 and receive input from a network technician describing steps taken to address each job undertaken. While device 400 has the form factor of a phone, it should be appreciated that device 400 can take the form of any portable electronic device, such as a laptop or tablet device. FIG. 4A displays a list of noise reports assigned to a particular network technician or group of network technicians. Each of the reports includes one or more points of interest (POIs), where a process the same as or similar to the one described in the text accompanying FIGS. 3A - 3C has identified a suspected impairment associated with a device or a network segment suspected to be adding noise exceeding a predetermined threshold to a cable network. It should be noted that while FIGS. 4A - 4F show some exemplary user interfaces displayable by portable electronic device 400, other user interfaces are possible and within the scope of this disclosure. For example, additional displays could allow for the display of every outstanding POI or noise report or every outstanding POI or noise report within a threshold distance from the network technician.

FIG. 4B shows a report illustrating details associated with a selected one of the reports displayed in the user interface depicted in FIG. 4A. In particular, graph 402 illustrates an average SNR associated with the POIs associated with report 422 over time. Graph 402 shows that an average SNR for the POIs fell below a critical level from 11:00am - 12:40pm. While graph 402 shows an average SNR value over time, this graph could also be configured to display average noise levels over time, in which case critical areas would be indicated by peaks in the graph rather than by valleys, as depicted here. It should be noted that graph 402 can include more than one line indicating other parameters such as codeword error in addition to SNR. In cases where SNR has returned to normal levels, a network technician can decide to return to check the POIs at the same time the following day so that there is an increased likelihood of identifying the problem causing the drop in cable network performance. This can be advisable where the problem is being caused by some environmental effect that changes over the course of the day. For example, the effect could manifest in response to extreme temperatures or periodic electromagnetic interference caused by other networks or electronic devices. The table below graph 402 indicates when particular POIs are contributing to the drop in SNR. In some instances, the technician may opt to check only POIs 2 and 3 since POI 1 is no longer generating enough noise to be flagged as meeting a minimum noise threshold. However, in the In some embodiments, device 400 or instruction and feedback collection engine 206 can be configured to reorder the POI(s) based on changes in the real-time SNR levels depicted in graph 402. In this way, the network technician is clear on the order in which the POIs should be addressed. Device 400 can also be configured to inform network technician when an order of checking the POIs is less important, which might let a network technician select a POI based on other factors such as the network technician's proximity to a particular POI.

The screens depicted in FIGS. 4C and 4D can be accessed when the network technician selects a region of graph 402 corresponding to a particular period of time. In the exemplary case, the network technician would have selected the region of graph 402 between the hours of 10:00 and 11:00. FIG. 4C shows a map view of the POIs associated with the selected report. The map view allows the network technician to see a proximity of the POIs to each other and in some embodiments also allows the technician to see a proximity of the POIs to the technician. Selection of one of the POIs in the map view allows additional information to be retrieved for the POI (see FIG. 4E). Selection of the map / list view affordance 404 allows the network technician to toggle between the views shown in FIGS. 4C and 4D. FIG. 4D allows the network technician to see a brief description of the possible problems and description of actions for the network being experienced at each of the POIs. In the depicted exemplary embodiment, FIG. 4D shows one or more suspected impairments affecting amplifier R756 and network segments associated with TAP T03 for respective POIs 1 and 3. FIG. 4D also shows a completed indicator advising the network technician that troubleshooting has already been performed and completed on POI 3.

FIG. 4E shows a detailed description of POI 1. In some embodiments, the user interface can be accessed directly by selecting one of the POIs listed below graph 402 from the UI depicted in FIG. 4B. Likewise, the POI can also be selected in one of the user interfaces depicted in FIGS. 4C or 4D. The detailed description of POI 1 includes a description of the network equipment it represents along with an address or location displayed on a map 406. The detailed description also includes a summary describing possible problems with the POI and possible description of actions to be taken by the network technician to fix the problem. In this exemplary case, an operator's comment is also included that instructs the network technician to be sure to check the test points prior to performing any maintenance. In some embodiments, the operator's note might require any other number of tasks to be performed prior to performing maintenance on POI 1. For example, it might be that the network technician needs to perform maintenance on another POI before performing maintenance on the selected POI. Near the bottom of the detailed description is a Start Troubleshooting button. In some embodiments, this button may be disabled until the technician is a threshold distance from POI 2. This location sensitive functionality can help prevent the network technician from entering troubleshooting steps while working on the wrong piece of network equipment.

FIG. 4F shows first step of a troubleshooting checklist for Amplifier R756 of POI 1. The troubleshooting checklist is customized based upon the type of network equipment associated with the POI. In the depicted example, the troubleshooting checklist contains specific troubleshooting steps to take for Amplifier R756. In some embodiments, the checklist can also be customized based on the type of noise identified on the network and based on a configuration and/or location of the network equipment associated with the POI. For example, an amplifier located outside of a Multi Dwelling Unit (MDU) feeding several modems in the MDU could have a checklist that differs from the checklist of an amplifier in the network that feeds a second amplifier. Furthermore, step 1 of the checklist depicted in FIG. 4F shows how a network technician is asked to visually inspect input/output segments of Amplifier R756 and to select a response from a set list of responses to characterize the condition of the input/output segments. In the depiction provided by FIG. 4F, the network technician has uploaded images depicting pictures of the network segment before and after the network technician performs maintenance to fix the network segment. Pictures taken and uploaded by the network technician using device 400 can help to confirm that network maintenance was actually performed in cases where problems meant to be addressed by the troubleshooting continue to affect the network.

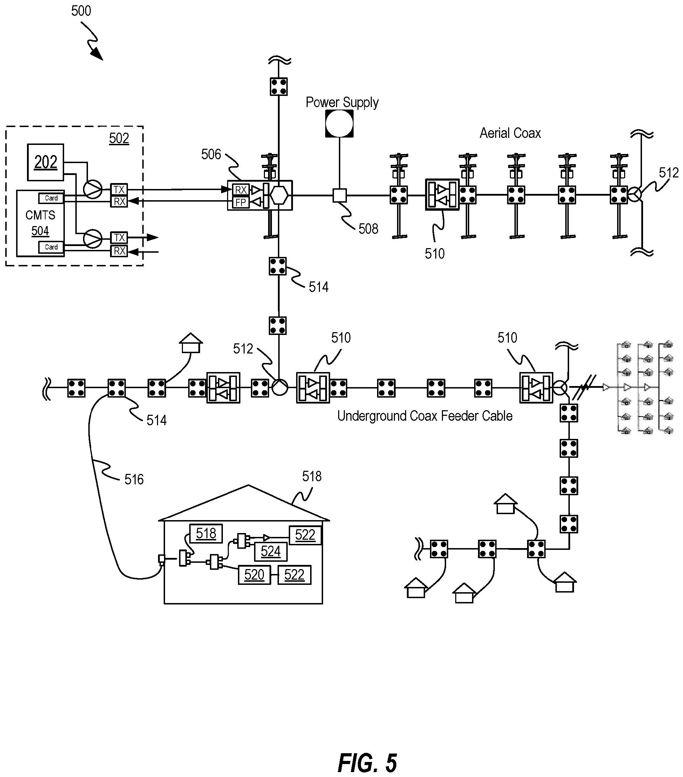

FIG. 5 shows a network map illustrating different network devices used in operating a data network 500. In particular, a central office 502 is depicted where data network 500 interfaces with a larger internet backbone. Central office 502 includes CMTS 504, which is responsible for handling inbound and outbound data associated with data network 500. Also located at central office 502 is data collection engine 202, which as depicted is capable of transmitting and receiving data from data network 500. Central office 502 is generally connected by fiber lines to a fiber node 506 by fiber lines that are typically less than 20km in length and can be configured as above or below ground fiber runs. While only a single fiber node 506 is depicted in FIG. 5 it should be appreciated that data network 500 can include multiple fiber nodes. Coaxial cables leaving fiber node 506 can be distributed above or below ground as illustrated in FIG. 5. The aerial coaxial branch includes a power injector 508, which can be configured to provide additional power for longer coaxial cable runs. Data network 500 can also include amplifiers 510 for increasing the signal strength of traffic travelling along coaxial cable of data network 500. Data network 500 also includes directional couplers 512, which manage the distribution of data along different branches of data network 500. Network TAPs 514, in addition to connecting the residential and commercial users to the network, allow for checking noise and power levels in various portions of data network 500. Residential or commercial users of data network 500 generally receive their signal by way of a drop cable 516. A particular residence or business, as depicted, can include multiple network devices. In particular, exemplary residence 518 includes a cable modem 518, a set top box 520, televisions 522 and telephone 524 that all rely on services provided by data network 500.

FIG. 5 illustrates the large variety of network devices that may require a data network service provider to troubleshoot when trying to identify network issues. Once noise localization architecture makes a POI determination indicating what type of network device is associated with the POI, a troubleshooting checklist is generated based on the identified device type. It should be noted as indicated previously that more than one checklist can be associated with a particular type of network equipment and that while a number of types of network equipment are described in FIG. 5 the described embodiments can be associated with any number of additional types of network equipment. For example, troubleshooting application would present checklist 526 to a network technician when troubleshooting a single modem 518 where the noise type being investigated is white ingress noise, impulse noise, impulse noise from street lights, pink noise or non-linear distortion noise due to corrosion on a distribution line after the last amp. However, a different checklist would be used when troubleshooting other noise types for modem 506. Furthermore, checklist 528 can be applied when troubleshooting particular types of noise detected at fiber node 506.

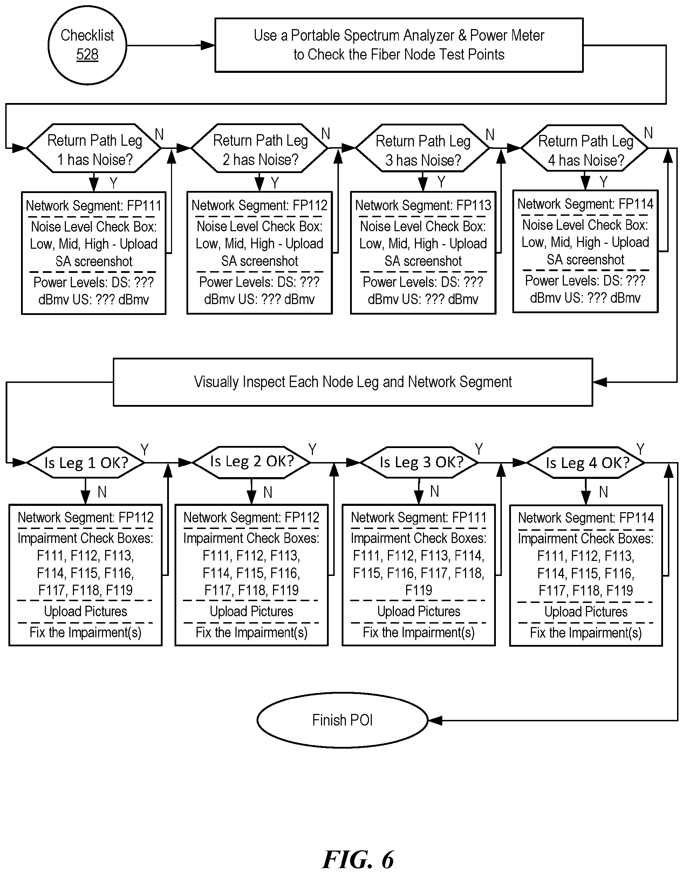

FIG. 6 shows details of exemplary checklist 528. The steps illustrated in FIG. 6 would be presented to a network technician sequentially on exemplary portable electronic device 400 after the network technician begins troubleshooting a fiber node determined to be affected by white ingress noise, impulse noise, impulse noise from street lights, pink noise or AC path noise. Fiber nodes diagnosed with having distortion due to a return path saturated amp or distortion due to excessive upstream power would utilize a different checklist. The steps in the checklist would be displayed in a manner consistent with or similar to the user interface depicted in FIG. 4F.

Step one in checklist 528 is to check the return path of Leg 1 for noise exceeding a predetermined threshold level and then if the detected noise is in excess of the predetermined threshold level, using a spectrum analyzer and a power meter on network segment FP111. The technician would be asked to submit a screenshot of the spectrum analyzer, select a checkbox corresponding to the detected noise level and enter measured upstream and downstream power levels on network segment FP111 to the troubleshooting application running on portable electronic device 400. The troubleshooting application would move on to a second step after receiving an indication that a threshold amount of noise was not present on the return path or after receiving the noise and power level readings from the network technician. Steps two, three and four are the same as step one except that they apply to return path legs two, three and four respectively.

At step five, the network technician is asked to make a visual inspection of leg 1 and network segment FP112. If the visual inspection is problem free, the troubleshooting application would progress to step six. Otherwise, the network technician is asked to select the types of impairments present. Impairment checkboxes available are F111, F112, F113, F114, F115, F116, F117, F118 and F119, which correspond respectively to loose connectors and adapters, cable radial shield cracking, center connector dirty, center connector too long, center connector corroded, damaged cable (crushed), damaged cable (sharply bent), damaged cable (hole in the shield), and corrosion. After documenting and uploading pictures of any impairments, the network technician is asked to fix any identified impairments and then move on to step six. Steps six, seven, eight and nine are the same as step five except that they apply to legs two, three and four respectively. Once complete with step nine, the network technician is finished troubleshooting the POI. At this point, the data generated by the technician while responding to the prompts of checklist 528 can be tabulated and sent to data analysis engine 204, which is responsible for performing noise localization on the cable network. Because the answers provided by the network technician are selected from defined lists, the tabulated data can be used by instruction and feedback collection engine 206 and/or data analysis engine 204 to label telemetry data with the identified network impairments causing the noise on the data network.

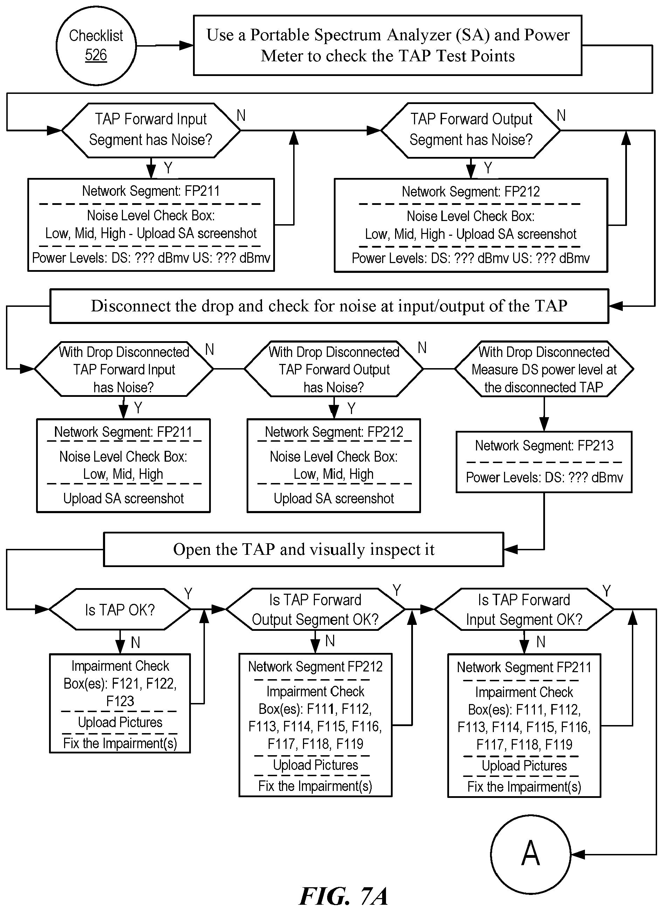

FIGS. 7A - 7B show details of exemplary checklist 526, which describes troubleshooting steps to take for a single modem identified as being associated with white ingress noise, impulse noise, impulse noise from street lights, pink noise or non-linear distortion noise due to corrosion on a distribution line after the last amp. Step one of checklist 526 is to check the TAP test point for the TAP forward input segment and then if a threshold amount of noise is detected measure noise and power levels using a spectrum analyzer and power meter. In the event noise is present the technician is asked to select a noise level checkbox corresponding to low, mid or high amounts of noise and upload a screenshot of a spectrum analyzer reading for network segment FP211. The network technician is also asked to enter power levels into the troubleshooting application as measured by a portable power meter for network segment FP 211. Step two is the same as step one except that it applies to checking the TAP Forward Output. At steps three and four the technician is asked to disconnect the drop and check for noise on the TAP Forward Input and TAP Forward Output. In the event noise is detected the network technician is asked to use the spectrum analyzer to measure the noise level across the associated network segment and upload a screenshot of the readings. At step five, the network technician is asked to record power levels on the disconnected TAP and enter the power levels into the troubleshooting application. At step six the network technician is asked to open and visually inspect the TAP for impairments F121, F122 and F123, which correspond respectively to loose TAP faceplate, damaged or corroded housing and damaged or missing gaskets. In the event that impairments are spotted, the network technician is asked to check a box in the troubleshooting application corresponding to the detected impairment(s) and then upload pictures of the impairment(s) to the troubleshooting application. The network technician is then responsible for fixing any identified impairments prior to moving on to step seven.

At step seven, the network technician is asked to visually inspect the TAP Forward Output Segment for impairments F111, F112, F113, F114, F115, F116, F117, F118 and F119, which correspond respectively to loose connectors and adapters, cable radial shield cracking, center connector dirty, center connector too long, center connector corroded, damaged cable (crushed), damaged cable (sharply bent), damaged cable (hole in the shield), and corrosion. Pictures of any identified impairments are uploaded to the troubleshooting application and then fixed by the technician before moving on to step eight. At step eight, the TAP forward input is checked for the same impairments listed in step seven and the technician is asked to upload pictures of any impairments and then fix the impairments.

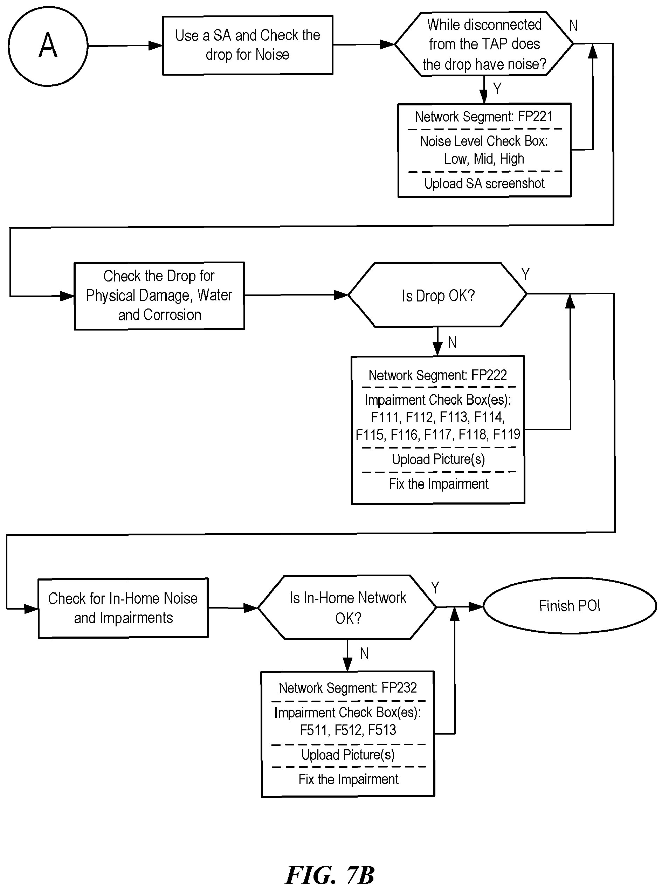

FIG. 7B picks up with step nine where the technician is asked to measure whether there is any noise on the disconnected drop and then input any noise levels where the measurements of the noise exceed a predetermined threshold. At step ten the network technician is asked to check the drop for physical damage water and corrosion. In the even there is an impairment detected, the network technician then must check one or more of impairment check boxes F 111, F 112, F 113, F114, F115, F116, F117, F118 and F119, the meaning of which has been given above. Pictures of the impairments are uploaded and then subsequently fixed by the network technician.

At step eleven, the network technician is asked to check for in-home noise and impairments that include F511, F512, F513, which correspond to loose connectors, damaged/defective splitters and damaged/defective cables. Pictures of any impairments are then uploaded to the troubleshooting application prior to being fixed by the network technician. Once step eleven is complete the POI is considered finished and the network technician can move on to the next POI for the report being worked upon. Once all POIs have been completed data provided by the technician or multiple technicians can be transmitted back to a service responsible for generating and tracking the noise reports.

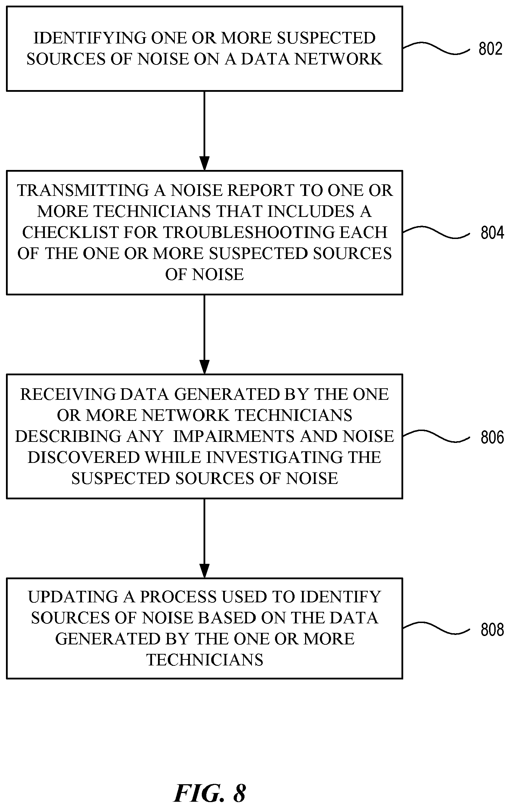

FIG. 8 describes a process for troubleshooting sources of noise on a data network. At step 802 a computing system includes a process configured to identify one or more suspected sources of noise on a data network. One method of detecting this noise is the process described in the paragraphs accompanying FIGS. 3A - 3C of this application. In some embodiments, the noise localization process can also include a machine learning process that leverages information provided by the network technicians. At step 804, the computing system transmits a noise report to one or more technicians to act upon. The noise report includes checklists that instruct the technicians what steps to take and in what order to take the steps when troubleshooting a particular type of network device. In some embodiments, the checklist is customized based on network device type, network device configuration and detected noise characteristics.

At step 806, the computing system receives data generated by the one or more network technicians describing any impairments and noise discovered while investigating the suspected sources of noise report. The data can be transmitted back to the computing system at the conclusion of each POI or at the closing of a report. In some embodiments, the data can be transmitted continuously to the computing system. Continuous transmission can allow the computing system to send warnings to the network technician in the event the data received is inconsistent with the POI being worked on.

At step 808, the process used to identify the sources of noise is updated based on the data generated by the one or more technicians. In embodiments where the computing system responsible for analyzing the noise includes a machine learning process, the data generated by the one or more network technicians can be ingested by the machine learning process to further train the machine learning process. Prior to updating the process, data received from the one or more network technicians can be reviewed to confirm its accuracy. For example, and as described above, metadata associated with images taken of the network devices can be checked to confirm the location and time information associated with a particular POI is accurate. Any data with inconsistencies can be sent back out for further network technician analysis and would not be used to train the machine learning process. Any improvement in the process can reduce a number of POIs network technicians need to check, thereby reducing an amount of time needed to fix any sources of noise affecting a cable or data network.

In some embodiments, a method consistent with the described embodiments includes detecting noise on a data network; determining a type of noise associated with the detected noise; identifying impairment types capable of producing the identified type of noise; correlating the identified impairment types with a plurality of locations on the data network capable of producing the identified impairment types; and identifying one or more groups of network devices with high noise scores to point to a highest probability location of the plurality of locations.

When applying this method, determining the type of noise comprises analyzing a noise signature of the detected noise. Analyzing the noise signature can include determining how the noise signature varies in time and frequency domains. The noise scores for the one or more groups of network devices are calculated based on network telemetry generated by the data network.

The foregoing description has been described with reference to specific embodiments. However, the illustrative discussions above are not intended to be exhaustive or to limit the invention to the precise forms described. Many modifications and variations are possible in view of the above teachings. Others skilled in the art are thereby enabled to best utilize the techniques and various embodiments with various modifications as suited to various uses.

Although the disclosure and examples have been described with reference to the accompanying drawings, it is to be noted that various changes and modifications will become apparent to those skilled in the art. Such changes and modifications are to be understood as being included within the scope of the disclosure.

## Claims

1. A method, comprising:
transmitting a noise report generated by a noise localization process to one or more network technicians that includes instructions for troubleshooting one or more suspected sources of noise;
receiving data describing impairments or noise exceeding a predetermined threshold identified by the one or more network technicians while investigating the suspected sources of noise; and
updating the noise localization process based on the received data.

2. The method of claim 1, wherein the process used to identify the sources of noise is updated autonomously by providing the data describing the impairments or noise to the process, and or wherein the instructions transmitted with the noise report correspond to the device types included in the one or more suspected sources of noise.

3. The method of any of claims 1-2, further comprising customizing the instructions based on a device type of a suspected source of noise, characteristics of the detected noise and a configuration of the suspected source of noise, and or wherein the data received includes sensor data gathered by the network technicians at the one or more suspected sources of noise.

4. The method of any of claims 1-3, wherein the data received includes data describing a nature of any impairments identified by the one or more network technicians while troubleshooting the one or more suspected sources of noise, and or wherein the suspected sources of noise are suspected sources of upstream noise.

5. The method of claim 1, further comprising customizing the instructions based on environmental factors known to affect a particular network device of the one or more suspected sources of noise, and or wherein each of the suspected sources of noise are network devices of the data network or network segments.

6. The method of any of claims 1-5, wherein the data received is received from a portable electronic device that is configured to receive the data from the network technician during and/or after completion of one or more network maintenance actions.

7. The method of any of claims 1-6 or independent thereof, comprising:
receiving telemetry data from a data network;
identifying one or more degradations of service on the data network based on the telemetry data;
correlating the identified one or more degradations of service on the data network with previously identified suspected sources of noise; and
updating one or more actions to be taken in response to the previously identified suspected sources of noise based on the identified one or more degradations of service.

8. The method of claim 7, wherein updating the one or more actions to be taken comprises canceling a service call associated with the previously identified suspected sources of noise, and or wherein updating the one or more trouble tickets comprises changing a priority of the one or more trouble tickets.

9. The method of any of claims 7-8 further comprising changing a schedule of tasks assigned to a network technician based on the changed priority of the one or more trouble tickets, and or wherein the one or more trouble tickets were initiated by a customer reported issue.

10. The method of any of claims 1-9 or independent thereof, comprising:
detecting noise on a data network;
determining a type of noise associated with the detected noise;
identifying impairment types capable of producing the identified type of noise;
correlating the identified impairment types with a plurality of locations on the data network capable of producing the identified impairment types; and
identifying one or more groups of network devices with high noise scores to point to a highest probability location of the plurality of locations.

11. The method of claim 10, wherein determining the type of noise comprises analyzing a noise signature of the detected noise, and or wherein analyzing the noise signature comprises determining how the noise signature varies in time and frequency domains.

12. The method of any of claims 10-11, wherein the noise scores for the one or more groups of network devices are calculated based on network telemetry generated by the data network.

13. A computer-readable storage medium storing one or more programs configured to be executed by one or more processors of an electronic device, wherein the one or more programs include instructions for performing the method of any of claims 1-12.

14. An electronic device, comprising:
one or more processors; and
memory storing one or more programs configured to be executed by the one or more processors, the one or more programs including instructions for performing the method of any of claims 1-13.
